# EUROPEAN PATENT SPECIFICATION

(11) **EP 1 054 717 B1**
(45) Date of publication and mention of the grant of the patent: **08.10.2003**
(21) Application number: 99902720.4
(22) Date of filing: 03.02.1999
(51) Int. Cl.: B01D 27/07, B01D 39/18

(54) **FUEL FILTER**
KRAFTSTOFFFILTER
FILTRE A CARBURANT

(30) Priority: 09.02.1998 GB 9802747
(43) Date of publication of application: 29.11.2000
(73) Proprietor: CHAININGS LIMITED, Newent GL18 1DZ (GB)
(72) Inventor: REEVES, Grantley Conrad John, Newent GL18 1DZ (GB)
(74) Representative: Senior, Alan Murray
(86) International application number: GB9900357
(87) International publication number: WO99039801

(56) References cited:
- FR-A- 939 728
- US-A- 4 242 206
- US-A- 4 915 837

## Description

The present invention relates to fuel filters particularly those for filtering diesel fuel.

One of the problems with diesel fuel is that there is a tendency, in the fuel tank of a vehicle or static engine, whether it be car, lorry, earth-moving plant or railway engine or other use, is that there is a tendency for condensation of water to occur in the fuel tank.

Traditionally fuel systems of such vehicles involve a fuel filter and water trap which removes a large proportion of the water. However, it is not capable of completely removing it, and as a result of this some water necessarily tends to pass through into the engine, and it is this which produces heavy smoke in the exhaust of a diesel engine, and which produces unnecessary wear on the diesel engine itself.

It will be advantageous, therefore, to provide a better or additional filtering system for use with diesel fuel supplies.

It is now proposed, according to the present invention, to provide a filter for use in a hydrocarbon fuel system, the filter including a container having an inlet and an outlet, and a filter medium enclosed tightly within the container, this filter medium including layers of alpha-cellulose with interposed layers of an additional non-absorbent laminar medium, the major surfaces of the alpha-cellulose layers abutting the major surfaces of the layers of additional laminar medium, the surfaces of the layers all extending in a direction generally between the inlet and outlet, whereby the flow is generally parallel to the surfaces of the layers, the layers of additional laminar medium reducing the pressure drop through the filter for the fuel, whereby a dedicated flow rate can be achieved through the filter for the fuel.

Preferably layers of alpha-cellulose and additional medium are placed one top of the other and rolled an to form a cylindrical mass which is disposed in the housing and the inlet and outlet are disposed so that the fuel flows parallel to the axis of the cylindrical mass.

The material from which the additional layer or layers is made can take many forms. However, in a preferred arrangement according to the invention, it is in the form of gauze, such as a wire gauze.

It will be appreciated that the relative thickness of the additional medium, such as gauze, and the alpha-cellulose layer or layers must be chosen so that a correct dedicated flow rate through the filter is achieved without there being any problem of the fuel bypassing the filtering effect of the alpha-cellulose.

Advantageously the container is formed from a relatively inexpensive material, such as plastics material, and the arrangement is manufactured as a "spin on" assembly. When the filter is exhausted, then it can be disposed of.

Preferably, according to the invention, the filter is associated with some form of sensor which determines when the drop in pressure across the filter exceeds a threshold value. When this occurs, in order to ensure that the engine is not starved of fuel, a bypass is provided to the filter and an alarm, such as a warning light, is activated to warn that the filter of the invention must be changed.

The filter is preferably positioned upstream of the fuel pump so that the pump pressure is not applied to the filter, thereby reducing the chances of the filter being damaged by such pressure.

In order that the present invention may more readily be understood, the following description is given, merely by way of example, reference being made to the accompanying drawings in which:-
Figure 1 is a schematic view of one embodiment of fuel system incorporating a fuel filter according to the invention;
Figure 2 is a schematic cross-section through one embodiment of filter unit according to the invention;
Figure 2A is a perspective schematic view showing the alpha-cellulose and gauze wrapped together to form a cylindrical filter mass.
Figures 3, 4, 5, and 6 show schematically several different forms of the additional medium; and
Figure 7 is a schematic cross-section through a second embodiment of filter unit according to the invention.

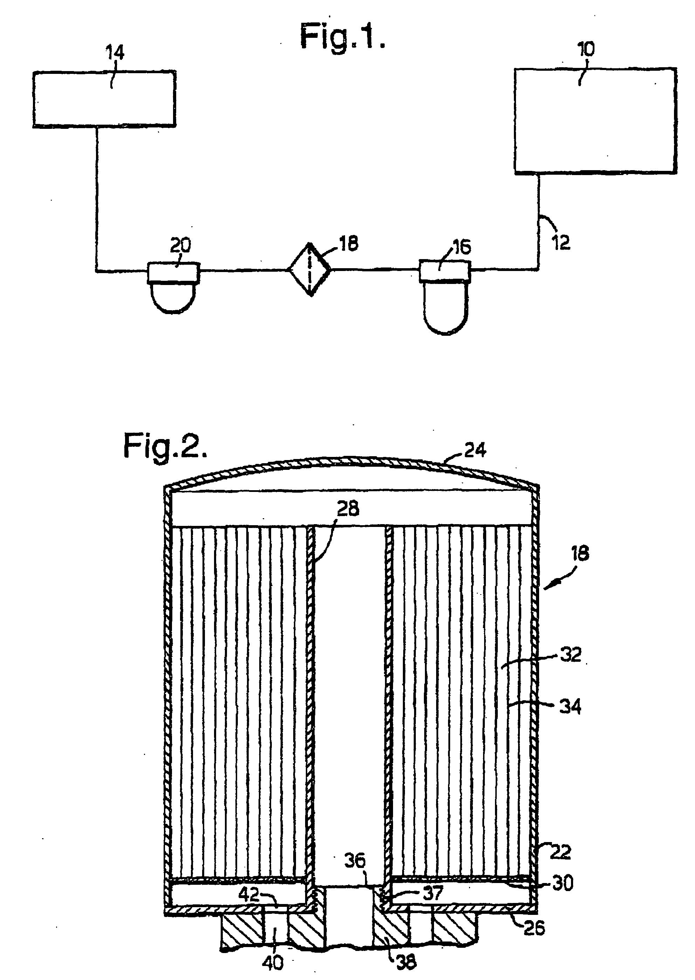

In Figure 1 there is illustrated a general schematic arrangement of a diesel engine fuel supply system incorporating a fuel filter according to the present invention.

The fuel system includes a fuel tank 10 and pipe-work 12 leading to an engine 14.

As in conventional fuel systems of this type, a standard type of primary fuel filter/water trap 16 is located downstream of the fuel tank, and is designed to remove the bulk of any water, e.g. condensation, which is mixed with the fuel.

Next in series with that is a fuel filter 18 according to the invention, and a fuel pump 20 then feeds the filtered fuel to the engine 14.

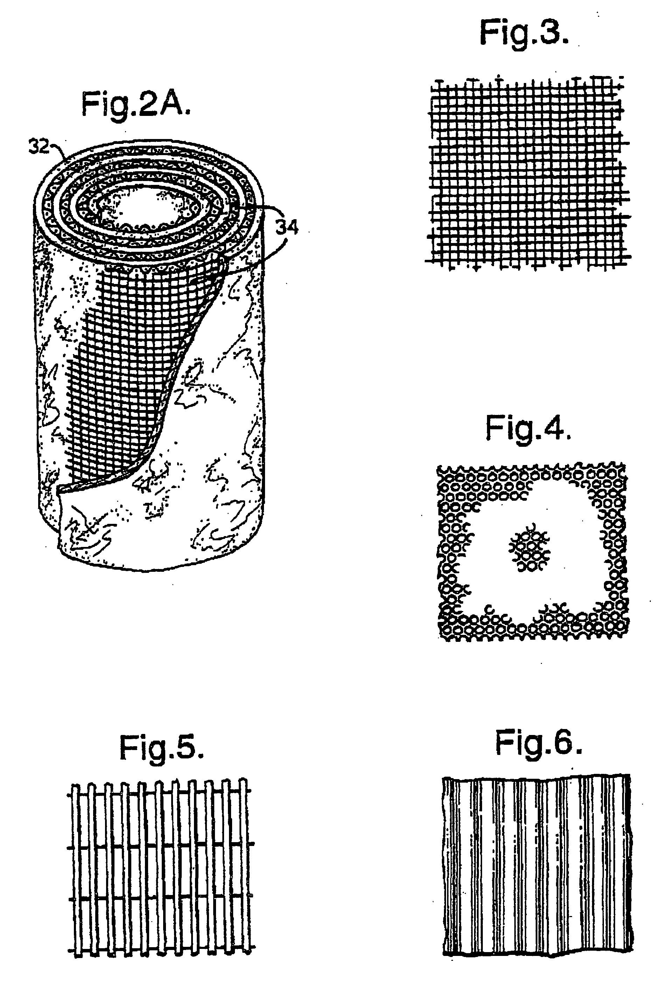

One embodiment of fuel filter of the invention is illustrated in Figure 2 and this incorporates a housing 22, having a cylindrical wall and a domed cap 24, and this can be conveniently made of plastics material, such a polypropylene. A base 26 is connected across the open end of the housing 22, and incorporates an axially extending central feed pipe 28, the lower end of which is secured to the base plate 26, and the upper end of which is spaced from the domed cover 24.

Spaced from the base 26 is a perforated support 30.

In the construction according to the invention, a filter mass is positioned around the feed pipe 28, within the housing 22, above the perforated support 30. This filter mass is shown as being in the form of alpha-cellulose sheet material 32 with interposed layers of an additional medium 34, whereby a dedicated flow rate can be achieved for the fuel.

In a preferred embodiment, as shown in Figure 2A, this is achieved by placing a sheet of alpha-cellulose material 32 and a layer of laminar structure 34, such as a wire gauze, one on top of the other, and then rolling them up into a cylinder, the dimensions of which are chosen so that the rolled up mass is a snug fit within the housing 22, and around the feed pipe 28, and its length is such as to leave a space, when mounted on the support 30, above the mass and below the end cover 24. In Figure 2A the thickness of the gauze is greatly exaggerated for clarity. Normally the thickness of the gauze will be about one half of the thickness of the alpha-cellulose layer. One example which works satisfactorily is a mesh of 400 micron pore size, which is 0.5 mm thick with the alpha-cellulose layer 1 mm thick.

The gauze 34, or other material forming the layer 34, provide a dedicated flow path through the filter, thereby ensuring that there is not an enormous pressure drop across the filter mass.

As can be seen from Figure 2, the inner portion of the lower end of the central feed pipe 28 is threaded at 37, and this enables the filter assembly 18 of the invention to be "spun on" to a spigot 36 of a mounting member 38. The mounting member 38 is provided with an annular suction manifold 40, which is positioned below ports 42, in the bottom plate 26.

In use, the manifold 40 is connected to the inlet of the pump 20, and the ball of the spigot 36 is connected to the pipe-work loading from the primary filter/water trap 16. The pump will produce a suction which will draw fuel from the tank 10, via the spigot 36 and the central feed pipe 28 into the upper chamber formed within the housing 22. The fuel will be drawn downwardly generally parallel to the gauze or other material 34, and water, and possibly any remaining particulate substance, will be removed from the fuel by the alpha-cellulose 32.

Alpha-cellulose has been found to be particularly effective in removing remaining water from fuel, and in particular diesel fuel.

The additional medium may, as indicated, take the form of gauze (Figure 3) but it is also contemplated that it could take many other forms such as a screen (Figure 4), corrugated or ribbed material (Figure 6), a series of rod like members secured together in parallel spaced or abutting relation (Figure 5), or any other form which will give a dedicated flow rate for the fuel through the filter mass.

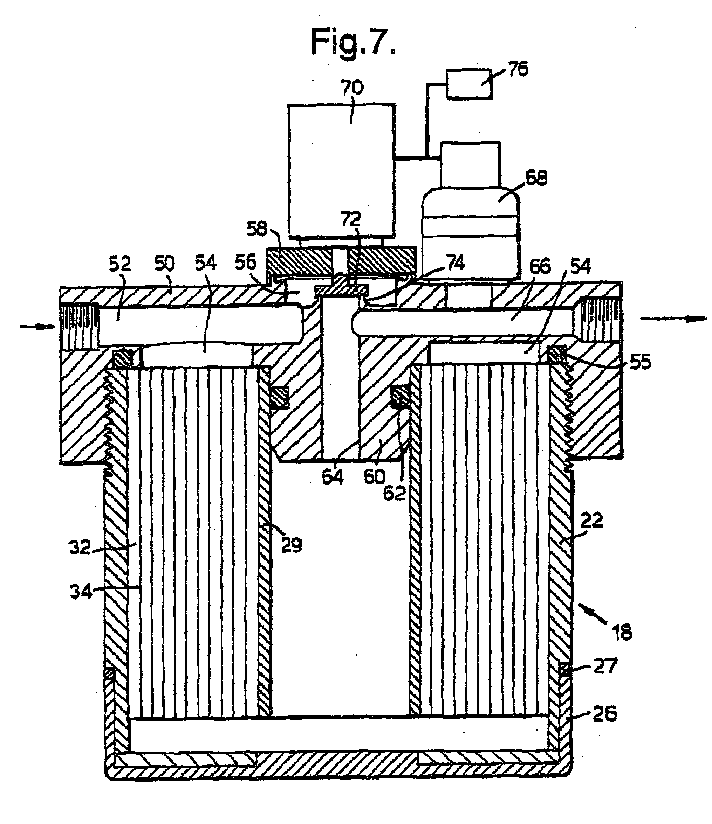

Figure 7 illustrates an alternative construction of the fuel filter 18. Like parts have been indicated by like reference numerals. Thus, there is a cylindrical housing 22, to which is welded at 27 an inverted cupped shaped base 26. As in the embodiment illustrated in Figures 2 and 2A, alpha cellulose material 32, and a laminar structure 34, of any of the varieties previously described, are fitted one on top of the other and rolled up into a cylinder and mounted within the housing 22. Interiorly of the filter mass thus formed is an inner support tube 29 which does not, however, in this instance act as a feed pipe.

Now this structure differs very significantly from that of Figure 2, insofar as there is an upper body 50, including an inlet feed passage 52, connected to an annular inlet manifold 54 located immediately above the filter mass 32. An O-ring 55 is used to seal the upper end of the housing, which is threaded into the upper body 50. The inlet passage 52 is also connected to a bypass chamber 56 formed near the centre, this being closed by a cap 58.

The casing 50 also includes a central spigot 60 sealed to the tube 29 by an O ring 62, the spigot being provided with a central outlet passage 64, which in turn is connected to a horizontally extending outlet duct 66. This outlet duct is also connected to the bypass chamber 56.

A vacuum pressure switch 68 is shown mounted on the upper body 50, and is operational if the pressure within the outlet duct 66 falls below a predetermined value. The actuation of this switch will operate a solenoid valve 70, mounted on cap 58 and having a valve head 72 in the bypass chamber, engageable with a valve seat 74, at the top of the passage 64. An alarm 76 is also connected to the vacuum pressure switch 68, and is operated when the pressure falls below the predetermined value mentioned earlier.

The inlet passage 52 in use is connected to the primary fuel filter/water trap 16 shown in Figure 1, and the outlet duct 66 is connected to the fuel pump 20.

The system operates precisely as before, but should the filter become blocked, the pressure within the duct 66 will be caused, by the pump 20, to drop and when it is lowered to a predetermined value, switch 68 will operate, firstly setting off the alarm 76, and secondly actuating the solenoid valve 70, so that fuel entering by the inlet 52 can bypass the filter mass via the bypass chamber 56, the fuel then flowing onwardly through the valve seat 74, into the outlet duct 66. The alarm will warn the driver that he should shortly have the filter element changed.

## Claims

1. A filter for use in a hydrocarbon fuel system, the filter (18) including a container (22) having an inlet (28,24,52) and an outlet (30,40,66), and a filter medium (32,34) enclosed tightly within the container, this filter medium including layers (32) of alpha-cellulose with interposed layers of an additional non-absorbent laminar medium (34), the major surfaces of the alpha-cellulose layers abutting the major surfaces of the layers of additional laminar medium, the surfaces of the layers all extending in a direction generally between the inlet and outlet, whereby the flow is generally parallel to the surfaces of the layers, the layers of additional laminar medium reducing the pressure drop through the filter for the fuel, whereby a dedicated flow rate can be achieved through the filter for the fuel.

2. A filter according to claim 1, wherein layers of alpha-cellulose and said additional medium are placed one on top of the other and rolled up to form a cylindrical mass, which is disposed in the container, and the inlet and outlet are disposed so that the fuel flows parallel to the axis of the cylindrical mass.

3. A filter according to claim 1 or 2, wherein the additional layer is in the form of a gauze, such as a wire gauze.

4. A filter according to claim 1, 2 or 3, wherein the container is formed from a plastics material.

5. A filter according to any preceding claim, wherein the inlet to the container includes a screw threaded feed pipe (28,37) enabling the container to be spun onto the engine associated with the hydrocarbon fuel system.

6. A filter according to any preceding claim, wherein the filter is associated with a sensor (68) which determines when the drop in pressure across the filter exceeds a threshold value.

7. A filter according to claim 6, and further including a by-pass (56) provided around the filter, this being activated by said sensor, and an alarm (76) associated with the sensor, the alarm being activated to warn that the filter must be changed.

8. A hydrocarbon fuel engine, including a hydrocarbon fuel supply system having a fuel pump (20), and a filter (18) according to any preceding claim included in the fuel supply system.

9. An engine according to claim 8, wherein the filter (18) is positioned upstream of the fuel pump (20) so that a pump pressure is not applied to the filter.

## Patentansprüche

1. Filter für den Einsatz in einem Kohlenwasserstoff-Kraftstoffsystem, wobei der Filter (18) einen Behälter (22) mit einem Einlass (28, 24, 52) und einem Auslass (30, 40, 66) sowie ein dicht in dem Behälter umschlossenes Filtermedium (32, 34) umfasst, dieses Filtermedium Schichten (32) aus Alphacellulose mit dazwischen angeordneten Schichten eines weiteren nicht absorbierenden laminares Mediums (34) umfasst, die Hauptflächen der Alphacelluloseschichten an den Hauptflächen der Schichten des weiteren laminaren Mediums anliegen, sich die Flächen der Schichten alle in eine Richtung im Allgemeinen zwischen dem Einlass und dem Auslass erstrecken, wodurch die Strömung im Allgemeinen parallel zu den Flächen der Schichten ist, wobei die Schichten des weiteren laminaren Mediums den Druckabfall durch den Filter für den Kraftstoff verringern, wodurch für den Kraftstoff eine zugeordnete Strömungsgeschwindigkeit durch den Filter erreicht werden kann.

2. Filter nach Anspruch 1, **dadurch gekennzeichnet, dass** Schichten aus Alphacellulose und dem weiteren Medium übereinander positioniert und zusammengerollt werden, um eine zylindrische Masse zu bilden, welche in den Behälter gegeben wird, und der Einlass und Auslass so angeordnet sind, dass der Kraftstoff parallel zur Achse der zylindrischen Masse strömt.

3. Filter nach Anspruch 1 oder 2, **dadurch gekennzeichnet, dass** die weitere Schicht in Form einer Gaze, zum Beispiel einer Drahtgaze, vorliegt.

4. Filter nach Anspruch 1, 2 oder 3, **dadurch gekennzeichnet, dass** der Behälter aus einem Kunststoffmaterial gebildet ist.

5. Filter nach einem der vorhergehenden Ansprüche, **dadurch gekennzeichnet, dass** der Einlass in den Behälter ein Zufuhrrohr (28, 37) mit Gewinde umfasst, welches ein Drehen des Behälters auf den zugehörigen Motor des Kohlenwasserstoff-Kraftstoffsystems ermöglicht.

6. Filter nach einem der vorhergehenden Ansprüche, **dadurch gekennzeichnet, dass** dem Filter ein Sensor (68) zugeordnet ist, welcher feststellt, wann der Druckabfall über dem Filter einen Schwelienwert übersteigt.

7. Filter nach Anspruch 6, welcher weiterhin eine um den Filter vorgesehene Umgehungsleitung (56), welche durch den Sensor aktiviert wird, sowie einen dem Sensor zugeordneten Alarm (76) umfasst, wobei der Alarm aktiviert wird, um zu warnen, dass der Filter gewechselt werden muss.

8. Kohlenwasserstoff-Kraftstoffmotor mit einem Kohlenwasserstoff-Kraftstoffzufuhrsystem mit einer Kraftstoffpumpe (20) und einem Filter (18) nach einem der vorhergehenden Ansprüche, welcher in dem Kraftstoffzufuhrsystem enthalten ist.

9. Motor nach Anspruch 8, **dadurch gekennzeichnet, dass** der Filter (18) stromaufwärts der Kraftstoffpumpe (20) angeordnet ist, damit ein Pumpdruck nicht am Filter angelegt wird.

## Revendications

1. Filtre destiné à être utilisé dans un système à carburant hydrocarbure, le filtre (18) comportant un conteneur (22) ayant une entrée (28, 24, 52) et une sortie (30, 40, 66), et un milieu filtrant (32, 34) enfermé de manière étanche dans le conteneur, ce milieu filtrant comportant des couches (32) d'alpha-cellulose avec des couches interposées d'un milieu laminaire non-absorbant supplémentaire (34), les surfaces principales des couches d'alpha-cellulose venant en butée contre les surfaces majeures des couches de milieu laminaire supplémentaire, les surfaces des couches s'étendant toutes dans une direction s'étendant de manière générale entre l'entrée et la sortie, de sorte que l'écoulement est généralement parallèle aux surfaces des couches, les couches de milieu laminaire supplémentaire réduisant la chute de pression à travers le filtre pour carburant, de sorte qu'un débit spécifique peut être obtenu à travers le filtre pour carburant.

2. Filtre selon la revendication 1, dans lequel des couches d'alpha-cellulose et dudit milieu supplémentaire sont placées les unes sur les autres et enroulées pour former une masse cylindrique, qui est positionnée dans le conteneur, et l'entrée et la sortie sont positionnées de sorte que le carburant s'écoule parallèlement à l'axe de la masse cylindrique.

3. Filtre selon la revendication 1 ou 2, dans lequel la couche supplémentaire est sous la forme d'un tamis, tel qu'un tamis de fils.

4. Filtre selon la revendication 1, 2 ou 3, dans lequel le conteneur est formé à partir d'une matière plastique.

5. Filtre selon l'une quelconque des revendications précédentes, dans lequel l'entrée du conteneur inclut un tuyau d'alimentation fileté (28, 37) permettant au conteneur d'être vissé sur le moteur associé au système à carburant hydrocarbure.

6. Filtre selon l'une quelconque des revendications précédentes, dans lequel le filtre est associé à un capteur (68) qui détermine lorsque la chute de pression à travers le filtre dépasse une valeur de seuil.

7. Filtre selon la revendication 6, et comportant de plus une dérivation (56) agencée autour du filtre, celle-ci étant activée par ledit capteur, et une alarme (76) associée au capteur, l'alarme étant activée pour avertir que le filtre doit être changé.

8. Moteur à carburant hydrocarbure, comportant un système d'alimentation en carburant hydrocarbure ayant une pompe à carburant (20), et un filtre (18) selon l'une quelconque des revendications précédentes inclus dans le système d'alimentation en carburant.

9. Moteur selon la revendication 8, dans lequel le filtre (18) est positionné en amont de la pompe à carburant (20) de sorte qu'une pression de pompe n'est pas appliquée au filtre.
